# EUROPÄISCHE PATENTANMELDUNG

(11) **EP 4 210 176 A1**
(43) Veröffentlichungstag der Anmeldung: **12.07.2023**
(21) Anmeldenummer: 22000258.8
(22) Anmeldetag: 13.12.2022
(51) Int. Cl.: H01R 13/405, H01R 13/533, H01R 43/24, H01R 13/66, B60L 53/16, H05K 5/00

(54) **VERFAHREN ZUR HERSTELLUNG EINES INLETS, INLET UND MULTIKONTAKTSTECKER**

(30) Priorität: 10.01.2022 DE 102022100403
(71) Anmelder: HARTING Automotive GmbH, 32339 Espelkamp (DE)
(72) Erfinder: Beimdieck, Carsten, 32339 Espelkamp (DE); Neuhaus, Wolfgang, 32339 Espelkamp (DE)

(57) **Zusammenfassung**

Die Erfindung beschreibt ein Verfahren zur Herstellung eines Inlets für ein Fahrzeug für den Stecker eines Multikontaktstecksystems. Durch konstruktive Maßnahmen kann das Inlet sehr einfach automatisiert hergestellt werden, was Kosten senkt und die Qualität verbessert. Die einzelnen Herstellschritte sind auch mit einfachen Produktionsmaschinen durchführbar, was die Kosten weiter senken hilft.

Die Erfindung handelt ebenfalls von einem Inlet für ein Fahrzeug, welches gemäß dem obigen Verfahren hergestellt ist, sowie von einem fahrzeugseitigen Stecker, der mittels des obigen Inlets aufgebaut wird.

## Beschreibung

### Beschreibung

Die Erfindung betrifft ein Verfahren zur effizienten und kostengünstigen Herstellung eines Inlets für ein Multikontaktstecksystem zur Übertragung elektrischer Energie als Wechselspannung und als Gleichspannung innerhalb desselben Stecksystems, insbesondere zum Laden von Elektroautos. Die Erfindung betrifft ebenfalls ein Inlet, welches mit dem erfindungsgemäßen Verfahren hergestellt werden kann, sowie einen Stecker des Multikontaktstecksystems, welcher mittels des Inlets hergestellt wird. Das Inlet ist insbesondere als Fahrzeuginlet geeignet. Ein Fahrzeuginlet ist ein Inlet, welches zum Einbau in ein Fahrzeug vorgesehen ist.

### Stand der Technik

Elektroautos gibt es schon länger als Fahrzeuge mit Verbrennungsmotor. Das wahrscheinlich erste Elektroauto wurde schon 1842 von Andrew Davidson hergestellt. Anfang des letzten Jahrhunderts erfreute sich das batterieelektrische Fahrzeug großer Beliebtheit, da es leise, sicher und ohne störende Abgase fuhr. Aufgrund der vor über 100 Jahren noch nicht sehr entwickelten Batterietechnik war schnelles laden nicht möglich, und es wurden keine großen Anstrengungen bezüglich der Stecksysteme zum Laden der damaligen Fahrzeuge unternommen. Durch die Erfindung des elektrischen Anlassers begannen sich ab den 1910er Jahren die Fahrzeuge mit Verbrennungsmotor aufgrund der größeren Reichweite immer mehr durchzusetzen. Elektrische Fahrzeuge gerieten ein wenig in Vergessenheit, verschwanden jedoch nie komplett vom Markt, sondern fanden immer bestimmte Nischen.

In den 1990er Jahren wurde aus Gründen des Umweltschutzes wieder vermehrt über elektrische Fahrzeuge nachgedacht, und große Fahrzeughersteller widmeten sich wieder diesem Thema. Es entstanden erste moderne Fahrzeuge wie der BMW E1, und es wurden Elektroumbauten von bestehenden Fahrzeugen angeboten.

Um den Betrieb eines Elektrofahrzeugs vor allem auf Langstrecke zu vereinfachen, wurden erste Versuche zur Standardisierung der Ladeinfrastruktur unternommen, vor allem in Frankreich, wo aufgrund des hohen Atomstromanteils und der schlechten Regelbarkeit dieser Kraftwerke ein großer Bedarf an der Abnahme des überschüssigen Nachtstromes bestand. Die in dieser Zeit verwendeten NiCd-Akkumulatoren konnten schon mit großen Leistungen geladen werden, so dass hohe Ströme zum Laden notwendig wurden. Der Einfachheit halber setzte man in dieser Zeit zum einen auf bestehende Standards für Industriestecksysteme, vor allem die standardisierten CEE-Stecksysteme in ein- und dreiphasiger Variante. Für das noch schnellere Laden bei Langstreckenfahrten wurde in dieser Zeit schon das direkte Laden des Akkumulators mit Gleichstrom entwickelt. Damit entstand in Frankreich der sogenannte Marechal Stecker von Marechal Electric, der mittels Stirndruckkontakten die Übertragung von AC-Leistung, DC-Leistung und Buskommunikation in einem Stecksystem realisierte. Die meisten französischen Fahrzeuge aus dieser Zeit waren mit diesem Steckersystem ausgestattet. Aber auch in den 1990er Jahren blieb es bei Kleinserien, und das Elektrofahrzeug konnte sich aus verschiedenen Gründen noch nicht in der breiten Masse durchsetzen.

Anfang der 2000er Jahre begann der nächste Anlauf, Elektrofahrzeuge am Markt zu etablieren. Um die bisherigen Hürden bei der Verbreitung auszuräumen, wurde begonnen, die Ladestecker und Allgemein die Ladeinfrastruktur zu standardisieren. Die International Electrotechnical Commission (IEC) begann die Normierung der Lademodi und Steckertypen für Elektrofahrzeuge, welche sich in der IEC 62196 (https:/Ide.wikipedia.org/wiki/IEC_62196) niederschlägt. In dieser Norm wurden 3 verschiedene Gruppen von Steckertypen vorgeschlagen und normiert: Den Typ 1 Stecker, den Typ 2 Stecker und den Typ 3 Stecker.

Der Typ 2 Stecker wurde aus dem schon vorhandenen, und in der IEC 60309 (https://de.wikipedia.org/wiki/IEC_60309) standardisierten CEE-Stecker für Mehrphasen-Industriesteckverbindungen abgeleitet, und in der IEC 62196 (https://de.wikipedia.org/wiki/IEC_62196_Typ_2) standardisiert. Dieser Steckertyp ist an sich nur für die Übertragung von AC-Leistung gedacht, einzig die Firma Tesla Motors nutzte eine leicht abgewandelte Variante auch für die Übertragung großer DC-Leistungen im Bereich bis zu 150kW in ihren Schnelladestationen.

Da in dieser Zeit klar wurde, dass zur Durchsetzung des batterieelektrischen Antriebs in der breiten Masse kurze Ladezeiten und damit hohe Ladeleistungen notwendig waren, rückte die direkte Gleichstromladung der Fahrzeuge wieder in den Vordergrund, und es entstand der sogenannte CCS-Stecker als Wettbewerber und Alternative zum schon vorhandenen und in den USA und Asien genutzten ChaDeMo Stecker, wobei die Abkürzung "CCS" für "Combined Charging System" steht, da der CCS-Stecker eine Erweiterung des bekannten Typ 2 Steckers um 2 DC-Leistungskontakte darstellt. 2011 wurde dieser Stecker als Europäischer Standard ebenfalls in der IEC 62196 für die Gleichstrom-Schnelladung gemäß dem Lademodus 4 normiert.

Da gemäß dem CCS Protokoll in der Version 2.0 und des entsprechenden Standards IEC 15118 Ströme bis zu 500A über die Kontakte fließen, sind diese entsprechend robust und groß ausgelegt. Dies hat große Kabelquerschnitte für die beiden DC-Kontakte zur Folge, welche bei der Herstellung des Stecksystems Probleme bereiten.

Aus Gründen der Effizienz und Zuverlässigkeit werden üblicherweise die Leitungen auf die Kontakte gecrimpt. Die Crimpung kann schnell und effizient hergestellt werden und weist bei entsprechender Werkzeugauslegung eine hohe Zuverlässigkeit auf, insbesondere bei Kontakten mit großem Leitungsquerschnitt. Diese Vorgehensweise hat aber den Nachteil, dass der Kontakt mit daran gecrimpter Leitung danach in den Stecker eingesetzt und verbaut werden muss, was aufgrund der biegeschlaffen Beschaffenheit der als Litze ausgeführten Leitungen schlecht automatisierbar ist. Daher sind beim Herstellen der Steckverbindungen bisher entweder viel Handarbeit oder teure Produktionsmaschinen notwendig, was die Kosten unnötig erhöht oder aber in der Variante mit viel Handarbeit eine aufwendige Qualitätssicherung notwendig macht.

### Aufgabenstellung

Es ist Aufgabe der Erfindung, die oben genannten Nachteile zu umgehen und ein Verfahren zur Herstellung eines Inlets für den Stecker eines Multikontaktstecksystems vorzuschlagen, welches eine automatisierte Herstellung mit vergleichsweise einfachen Produktionsmaschinen ermöglicht, und somit gegenüber dem Stand der Technik Kosten einspart sowie die Qualität des Stecksystems verbessert. Es ist ebenfalls Aufgabe der Erfindung, ein Inlet für den Stecker solch eines Multikontaktstecksystems anzugeben, sowie den Stecker dieses Multikontaktstecksystems anzugeben.

Die Aufgabe bezüglich des Verfahrens wird gelöst durch ein Verfahren zur Herstellung eines Inlets für ein Multikontaktstecksystem zur Übertragung hoher elektrischer Gleichspannungs- und Wechselspannungsleistungen sowie einer Buskommunikation, mit den folgenden Schritten:
- Umspritzung von mehreren AC-Leistungskontaktstiften und Buskontaktstiften in einer vorbestimmten Konfiguration und/oder Verrastung in einer Halteklammer zur Herstellung einer Halteklammer Baugruppe,
- Einschieben der Halteklammer Baugruppe in einen Isolierkörper, Einsetzen einer Leiterkarte mit darauf angebrachten Temperatursensoren und Einbringen thermischer Brücken zwischen DC-Leistungskontaktstiften und Temperatursensoren sowie Vergießen der Leiterkarte mit einer Vergußmasse zur Herstellung einer vergossenen Baugruppe,
- Verschrauben und/oder Verrasten mit Rahmenteilen zur Herstellung des Inlets.

Diese Schritte sind alle einfach automatisierbar, da bei den entsprechenden Teilen auf einfache Verrastungsmechanismen und wo nötig erst spätere Verschraubungen geachtet wurde, damit die aufeinanderfolgenden Verfahrensschritte in einer vergleichsweise einfachen Produktionslinie realisiert werden können, so dass vorteilhaft ein qualitativ sehr hochwertiges und gleichzeitig kostengünstiges Inlet für den Stecker bzw. Ladestecker, insbesondere eines Fahrzeugs, hergestellt werden kann.

In einer weiteren Ausführungsform wird zur Herstellung des Inlets zusätzlich noch ein Wasserablauf an ein Rahmenteil angebracht. Diese Maßnahme stellt vorteilhaft sicher, dass die Rahmenteile im Spritzgußverfahren einfacher hergestellt werden können, da weniger Schieber etc. im Spritzgußwerkzeug notwendig sind.

In einer anderen weiteren Ausführungsform wird zur Herstellung des Inlets zusätzlich noch ein Dichtband auf eins der Rahmenteile aufgebracht. Auch diese Maßnahme stellt vorteilhaft die kostengünstigere Herstellung der Rahmenteile sicher, da auf aufwendige 2-Komponenten Spritzgußverfahren verzichtet werden kann.

In einer Ausführungsform sind die die thermischen Brücken Stanz-Biegebleche, welche auf die jeweiligen DC-Leistungskontaktstifte aufgeschoben werden, und die Stanz- Biegebleche eine Lasche aufweisen, die in Montagelage auf dem jeweiligen Temperatursensor aufliegt. Diese Maßnahme stellt vorteilhaft eine gute und kostengünstige thermische Verbindung zwischen den DC-Leistungskontaktstiften und den Temperatursensoren sicher, da die Stanz- Biegebleche einfach und kostengünstig herzustellen und auch an den DC-Leistungskontaktstiften anzubringen sind.

In einer alternativen Ausführungsform sind die thermischen Brücken thermisch leitende Folien, welche an den jeweiligen DC-Leistungskontaktstiften angebracht werden, wobei die thermisch leitenden Folien jeweils eine Lasche aufweisen, welche in Montagelage auf den jeweiligen Temperatursensor aufgeklebt wird. Diese alternative Maßnahme stellt ebenfalls vorteilhaft einen guten Wärmeübergang von den DC-Leistungskontaktstiften auf die Temperatursensoren sicher, und kann aufgrund der Klebrigkeit der thermisch leitenden Folien besonders gut appliziert werden.

In einer weiteren Ausführungsform weist die Leiterkarte Anschlüsse für die Temperatursensoren auf. Dadurch können die Temperatursensoren besonders einfach mittels eines Steckers mit mehreren Steck- oder Buchsenkontakten kontaktiert werden, und ein aufwendiges Handling von mehreren Leitungen entfällt.

In einer weiterführenden Ausführungsform sind die Anschlüsse der Temperatursensoren gleichartig wie die Anschlüsse der Buskontaktstifte ausgebildet und mit den Anschlüssen der Buskontaktstifte in einem Raster angeordnet. Diese Maßnahme erleichtert die Kontaktierung zusätzlich, da die Anschlüsse für die Temperatursensoren und die Anschlüsse der Buskontaktstifte mit dem gleichen Stecker in einem Schritt hergestellt werden können. Da der Stecker vorteilhaft kodiert ist, sind Fehlverbindungen ausgeschlossen.

In einer alternativen Ausführungsform ist der Wasserablauf Teil eines der Rahmenteile. In manchen Konfigurationen kann ein Wasserablauf ohne viel höhere Kosten direkt mit einem der Rahmenteile hergestellt werden, was einen Arbeitsschritt und damit Kosten und Aufwand in der Produktionslinie einspart.

In einer ähnlichen alternativen Ausführungsform ist auch das Dichtband Teil eines der Rahmenteile. Dies erfordert einen Zwei- oder Mehrkomponentenspritzguß, kann jedoch ebenfalls in bestimmten Konstellationen vorteilhaft günstiger und bezüglich der Qualität hochwertiger sein.

Die Aufgabe bezüglich des Inlets wird gelöst mit einem Inlet für ein Multikontaktstecksystem zur Übertragung hoher elektrischer Gleichspannungs- und Wechselspannungsleistungen sowie einer Buskommunikation, hergestellt nach einem oder mehreren der oben aufgeführten Verfahrensschritte. Dies stellt vorteilhaft ein hochwertiges und gleichzeitig kostengünstiges Inlet sicher, da die Herstellung automatisiert erfolgen kann.

In einer besonders bevorzugten Ausführungsform ist das Inlet für den Einbau in ein Fahrzeug konfiguriert. Da in der Automobilindustrie besonders hohe Qualitätsanforderungen gelten, ist ein solches Inlet besonders vorteilhaft für die Nutzung in einem Fahrzeug.

Die Aufgabe bezüglich des Steckers wird gelöst durch einen Stecker für ein Multikontaktstecksystem zur Übertragung hoher elektrischer Gleichspannungs- und Wechselspannungsleistungen sowie einer Buskommunikation, wobei auf ein Inlet oben beschriebenes Inlet 2 DC-Kabelanschlüsse aufgeschraubt sind, sowie Steckverbindungen zur Kontaktierung der AC-Leistungskontaktstifte und der Anschlüsse der Temperatursensoren sowie der Buskontaktstifte angebracht sind. Dies stellt einen besonders einfach herzustellenden und hochwertigen Stecker sicher, der aufgrund der hohen Anforderungen in der Automobilindustrie besonders für Fahrzeuge hervorragend geeignet ist. Solch ein Stecker wird besonders bevorzugt als Ladestecker für ein batterieelektrisches Fahrzeug verwendet, da hier die Anforderungen der Übertragung von Wechselstromleistungen und der alternativen Übertragung von hohen Gleichstromleistungen gegeben sind. Die zu übertragenden Wechselstromleistungen bewegen sich dabei im Bereich von etwa 1000W bis 44kW, und die zu übertragenden hohen Gleichstromleistungen von etwa 20kW bis zu 500kW.

### Ausführungsbeispiel

Ein Ausführungsbeispiel der Erfindung ist in den Zeichnungen dargestellt und wird im Folgenden näher erläutert. Es zeigen:
- Fig. 1: Eine erste Ansicht einer Kontaktgruppe für einen Typ 2 Stecker mit sichtbar dargestellten genormten Rundkontakten der AC-Leistungskontaktstifte, die durch eine Kunststoffumspritzung in korrekter Anordnung gehalten wird.
- Fig. 2: Eine zweite Ansicht einer Kontaktgruppe für einen Typ 2 Stecker mit sichtbar dargestellten Flachsteckkontakten der AC-Leistungskontaktstifte, die durch eine Kunststoffumspritzung in korrekter Anordnung gehalten wird.
- Fig. 3: Die Kontaktgruppe, welche in eine Halteklammer eingeschoben wird.
- Fig. 4: Eine erste Ansicht der Halteklammer Baugruppe.
- Fig. 5: Eine zweite Ansicht der Halteklammer Baugruppe.
- Fig. 6: Die Halteklammer Baugruppe, welche in einen Isolierkörper eingesetzt wird.
- Fig. 7: Die Halteklammer Baugruppe, welche in dem Isolierkörper verrastet ist.
- Fig. 8: Eine Leiterkarte, welche in den Isolierkörper eingeschoben wird.
- Fig. 9: Die Baugruppe bestehend aus Isolierkörper, Halteklammer Baugruppe und Leiterkarte.
- Fig. 10: Das Einsetzen von DC-Leistungskontaktstiften in die Baugruppe gemäß Fig. 9
- Fig. 11: Die Baugruppe mit den eingesetzten DC-Leistungskontaktstiften.
- Fig. 12: Eine Detailansicht der Baugruppe mit angebrachtem Blech zur Verbindung von AC-Leistungskontakt und NTC-Temperatursensor.
- Fig. 13: Eine Gesamtansicht der Baugruppe mit angebrachtem Blech zur Verbindung von AC-Leistungskontakt und NTC-Temperatursensor.
- Fig. 14: Eine Detailansicht der Baugruppe mit angebrachter Folie zur Verbindung von AC-Leistungskontakt und NTC-Temperatursensor.
- Fig. 15: Das Einbringen einer wärmeleitfähigen Vergußmasse zur Isolation und besseren Wärmeübertragung.
- Fig. 16: Das Einsetzen der Baugruppe in einen Rahmen
- Fig. 17: Die in den Rahmen eingesetzte Baugruppe.
- Fig. 18: Das Aufsetzen und Verrasten eines Deckels auf die in den Rahmen eingesetzte Baugruppe.
- Fig. 19: Das Verschrauben des Deckels mit der Baugruppe.
- Fig. 20: Das Einschrauben eines Wasserablaufs in den Rahmen.
- Fig. 21: Das Aufbringen eines Dichtungsbandes auf den Rahmen.
- Fig. 22: Das Aufschieben einer DC-Anschlusskappe auf das Kabel.
- Fig. 23: Das Aufschieben und Crimpen einer Schirmhülse.
- Fig. 24: Das Verbinden einer Schweißfahne mit den Litzen der Leitung durch Ultraschallschweißen.
- Fig. 25: Das Aufschieben eines DC-Anschlussgehäuses.
- Fig. 26: Das Einsetzen einer DC-Anschlussschraube.
- Fig. 27: Die bisherige Baugruppe mit eingesetzter DC-Anschlussschraube.
- Fig. 28: Das weitere Aufschieben der DC-Anschlusskappe.
- Fig. 29: Das Verrasten der DC-Anschlusskappe.
- Fig. 30: Die verrastete DC-Anschlusskappe mit sichtbarem Schirmabgang.
- Fig. 31: Das Anschrauben des DC-Kabelanschlusses an das Inlet.
- Fig. 32: Die gesamte Baugruppe aus Inlet und DC-Kabelanschluss.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein.

Richtungsangaben wie beispielsweise "links", "rechts", "oben" und "unten" sind mit Bezug auf die jeweilige Figur zu verstehen und können in den einzelnen Darstellungen gegenüber dem dargestellten Objekt variieren.

Der Begriff "Baugruppe" wird im Folgenden oft für das Ergebnis der bisher ausgeführten Verfahrensschritte bezeichnet, also den Stand des Zusammenbaus des Multikontaktstecksystems nach den bisher ausgeführten Verfahrensschritten. Daher ist eine "Baugruppe" je nach Verfahrensschritt eine andere, und der Begriff "Baugruppe" daher nicht gleichbedeutend mit einer bestimmten Einheit. Eine bestimmte Einheit nach einer vorbestimmten Anzahl von Verfahrensschritten wird im Folgenden dann auch mit einer bestimmten Bezeichnung benannt, z.B. "Halteklammer Baugruppe **22**"**.**

### Aufbau und Herstellung des CCS-Inlets

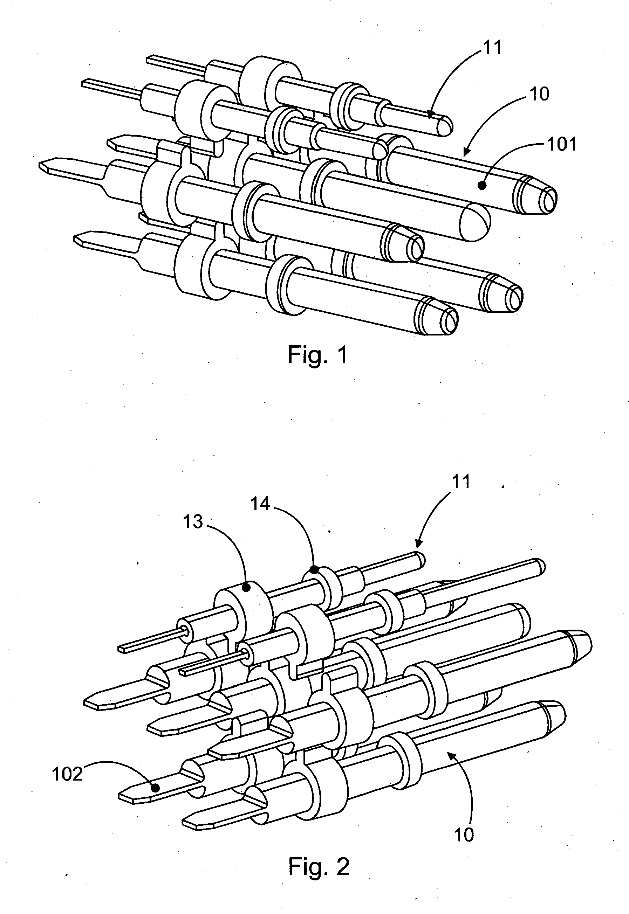

Die **Fig. 1** zeigt eine erste Ansicht einer Kontaktgruppe für einen Typ 2 Stecker mit sichtbar dargestellten genormten Rundkontakten **101** von AC-Leistungskontaktstiften **10** und Buskontaktstiften **11,** welche durch eine Kunststoffumspritzung als ersten Schritt der Herstellung des Multikontaktstecksystems in korrekter Anordnung gehalten werden. Die vorderen Kontaktbereiche der Stifte sind in der IEC 62196 normiert und entsprechend der Typ 2 Spezifikation angeordnet. Dies ist möglich, da hier auf ein bisher erfolgtes crimpen der Leitungen auf die Kontaktstifte bewusst verzichtet wird.

**Fig. 2** zeigt eine zweite Ansicht der Kontaktgruppe für einen Typ 2 Stecker mit sichtbar dargestellten Flachsteckkontakten der AC-Leistungskontaktstifte, die durch eine Kunststoffumspritzung in korrekter Anordnung gehalten wird, aus einer anderen Perspektive, in der das andere Ende der Kontaktstifte gut sichtbar ist. Es ist gut zu sehen, dass die AC-Leistungskontaktstifte **10** auf dieser Seite einen Flachsteckkontakt **102** zur späteren Kontaktierung der Leitungen aufweisen. Erst durch diese Maßnahme ist eine Umspritzung mit Kunststoff **13** zur Anordnung der Stifte überhaupt möglich. Zusätzlich wird noch eine zweite Kunststoffumspritzung **14** als Anschlag für die Montage an den Kontaktstiften **10, 11** angebracht.

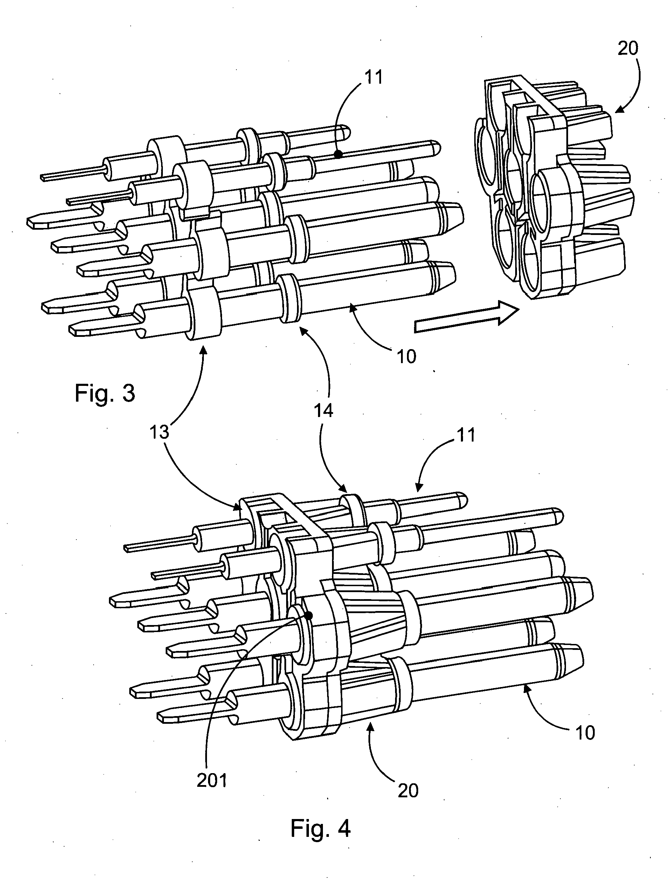

Der nächste Schritt der Herstellung des Multikontaktstecksystems ist in **Fig. 3** zu sehen. **Fig. 3** zeigt die Kontaktgruppe, welche in eine Halteklammer eingeschoben wird. Hier werden die mit Kunststoff umspritzten Kontaktstifte in eine Halteklammer **20** für AC- und Bus(signal)kontaktstifte eingeschoben und verrastet. Die Kunststoffumspritzung **14** als Anschlag sorgt für die notwendige Verrastung, so dass die Halteklammer **20** und die umspritzten Kontaktstifte fest miteinander verbunden sind. Durch Nasen in der Kunststoffumspritzung **13** und Aussparungen in der Halteklammer **20** ist ein Verdrehschutz **201** gewährleistet, was aufgrund der Flachsteckkontakte **102** der AC-Leistungskontaktstifte **10** notwendig ist. Die Halteklammer ist in gewissen Maß elastisch ausgeführt, so dass die Kontaktstifte eingeschoben werden können und dann verrasten.

**Fig. 4** zeigt eine erste Ansicht der Halteklammer Baugruppe **22,** in der die Kontaktstifte mit der Halteklammer **20** verrastet sind. In dieser Ansicht ist der Verdrehschutz **201** für die Kontaktstifte **10, 11** gut zu erkennen.

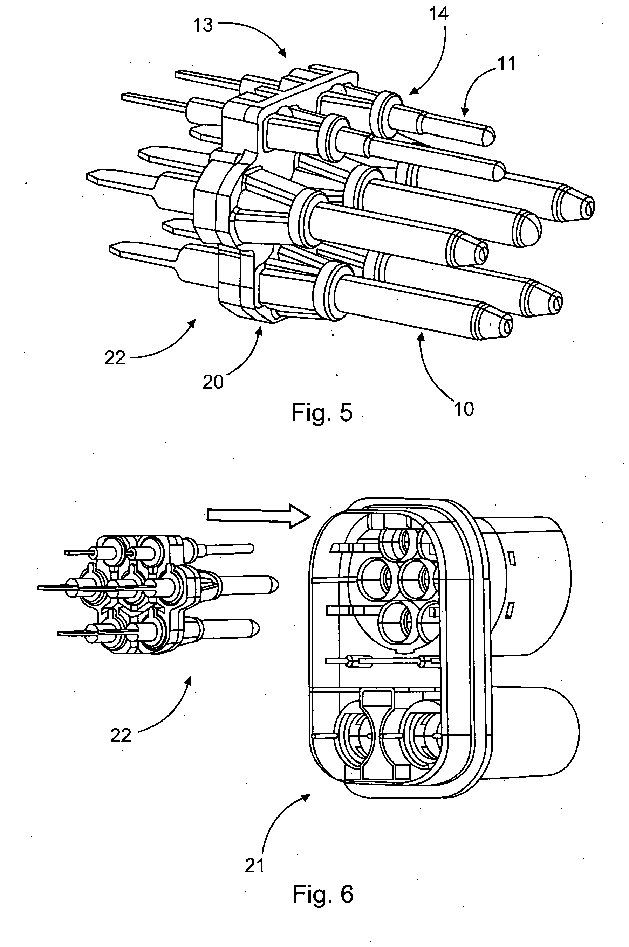

**Fig. 5** zeigt eine zweite Ansicht der Halteklammer Baugruppe **22,** in der die Kontaktstifte mit der Halteklammer **20** verrastet sind. Hier ist die Verrastung aufgrund der Kunststoffumspritzung **14** als Anschlag gut zu erkennen.

**Fig. 6** zeigt den nächsten Schritt, nämlich das Einsetzen der Halteklammer Baugruppe **22** in einen Isolierkörper **21.** Die Halteklammer Baugruppe **22** wird hierzu in den Isolierkörper **21** eingesetzt, und mittels am Isolierkörper **21** angebrachter Rastnasen verrastet.

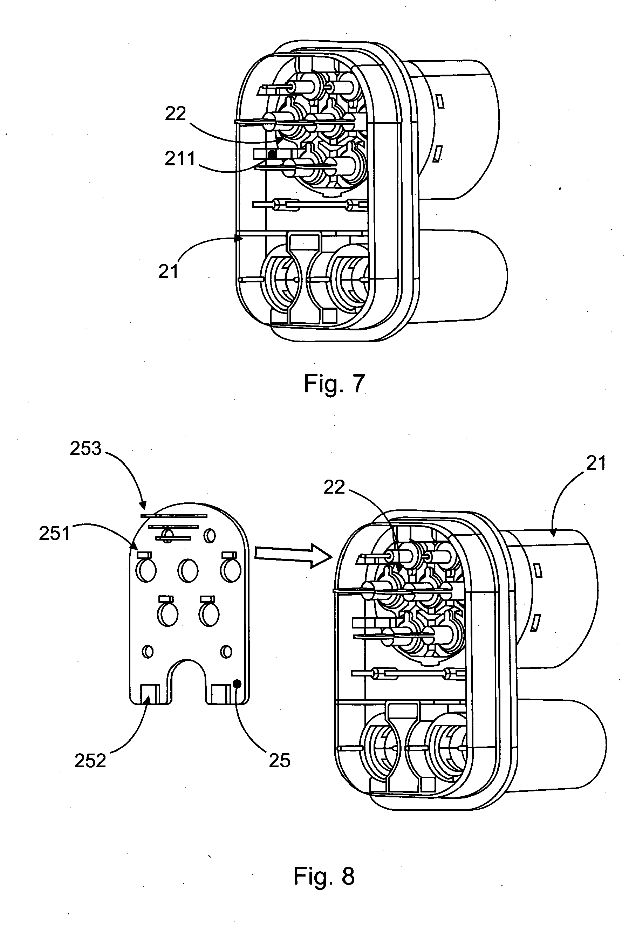

**Fig. 7** zeigt die Halteklammer Baugruppe **22,** welche in dem Isolierkörper **21** verrastet ist. Die Verrastung **211** ist hier gut zu erkennen.

**Fig. 8** zeigt den nächsten Verfahrensschritt des Einschiebens einer Leiterkarte **25** in den Isolierkörper **21.** Die Leiterkarte **25** weist hierzu Aussparungen auf, durch die die Enden mit den Flachsteckkontakten **102** der AC-Leistungskontaktstifte **10** und Buskontaktstifte **11** hindurchreichen. Auf der Leiterkarte **25** sind 4 NTC-Temperatursensoren für AC-Leistungskontaktstifte **251** und 2 PT1000 Temperatursensoren für DC-Leistungskontaktstifte **252** angeorrdnet, immer direkt neben den jeweiligen AC-Leistungskontaktstiften **11** und bezüglich der DC-Leistungskontaktstifte direkt neben den Aufnahmen hierfür. Die NTC-Temperatursensoren für AC-Leistungskontaktstifte **251** und PT1000 Temperatursensoren für DC-Leistungskontaktstifte **252** sind mit Anschlüssen **253** für diese Sensoren elektrisch verbunden.

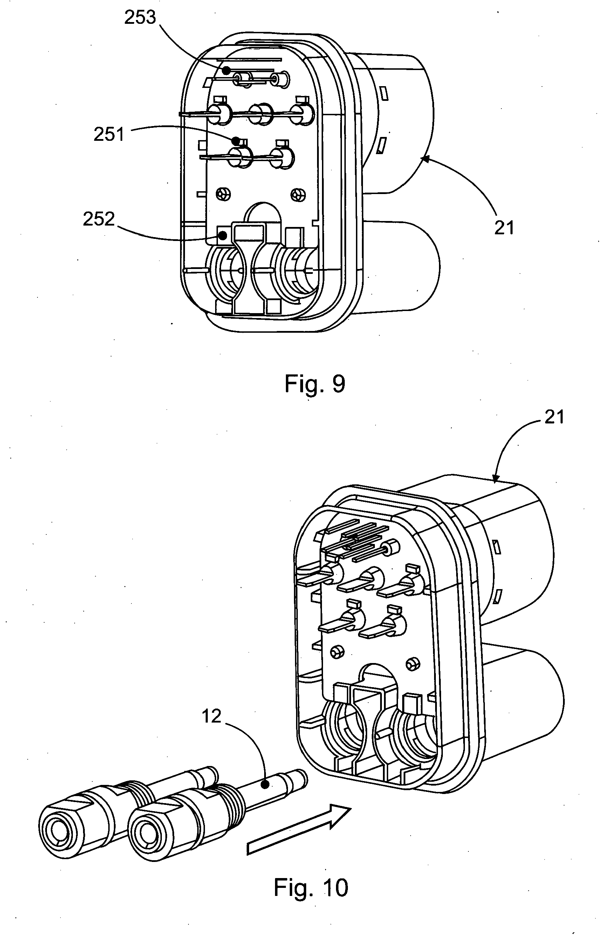

**Fig. 9** zeigt die eingeschobene Leiterkarte **25** und somit die Baugruppe bestehend aus Isolierkörper **21,** Halteklammer Baugruppe **22** und Leiterkarte **25.**

**Fig 10** zeigt den nächsten Herstellungsschritt des Einsetzens der DC-Leistungskontaktstifte **12** in die Baugruppe gemäß **Fig. 9****.** Die DC-Leistungskontaktstifte **12** sind vorkonfektioniert und weisen auf der durch die IEC 62196 vorgegebene Kontaktgeometrie abgewandten Seite einen Schraubanschluss mit einer Abflachung zur Verdrehsicherung auf. Die DC-Leistungskontaktstifte **12** werden einfach in die dafür vorgesehenen Aufnahmen des Isolierkörpers **21** eingesetzt.

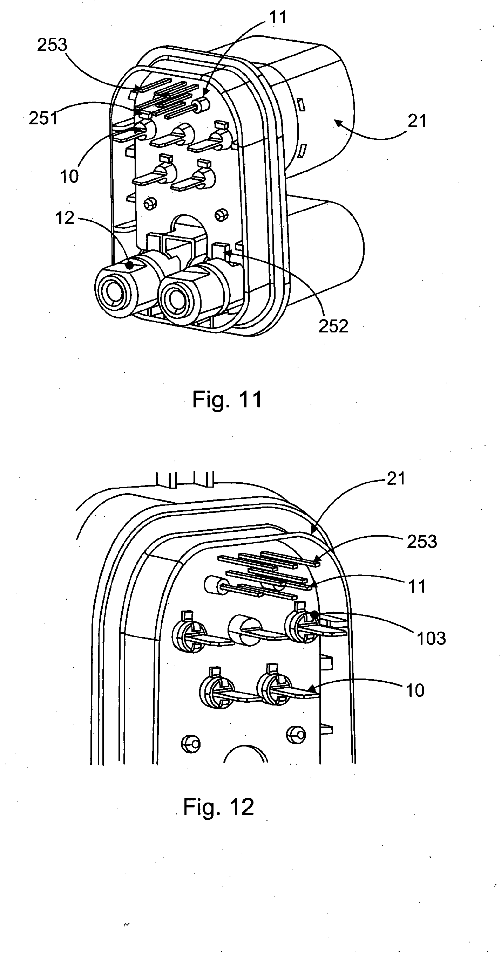

**Fig. 11** zeigt die Baugruppe mit den eingesetzten DC-Leistungskontaktstiften **12.** Diese Ansicht zeigt, dass die PT1000 Temperatursensoren **252** für die DC-Leistungskontaktstifte **12** direkt neben den DC-Leistungskontaktstiften **12** angeordnet sind. Diese Anordnung dient der effizienten Wärmeübertragung, welche Maßnahme in

**Fig. 12** dargestellt ist. Diese Figur zeigt die Detailansicht einer ersten Alternative einer Baugruppe mit angebrachten Blech **103** zur thermischen Verbindung von AC-Leistungskontakt **10** und NTC-Temperatursensor **251.** Das Blech **103** zur thermischen Verbindung von AC-Leistungskontakt **10** und NTC-Temperatursensor **251** wird hierbei über das Ende des AC-Leistungskontaktstiftes **10** mit dem Flachsteckkontakt **103** geschoben, und kommt am "Fuß" des Flachsteckkontaktes **103** zu liegen. Zwei Laschen begrenzen die Lage am Ende des Flachsteckkontaktes **103,** und eine dritte Lasche kommt direkt auf dem entsprechenden NTC-Temperatursensor **251** zu liegen. Da das Blech gut wärmeleitend ist, überträgt es die im AC-Leistungskontaktstift **10** entstehende Wärme effizient auf den NTC-Temperatursensor **251** für den AC-Leistungskontaktstift **10.** Einzig der AC-Leistungskontaktstift **10** für den Erdanschluss, der mittig unter den 5 AC-Leistungskontaktstiften **10** angeordnet ist, weist keinen NTC-Temperatursensor für diesen AC-Leistungskontaktstift auf, da über den Erdleiter kein Strom fließt und eine Erwärmung somit ausgeschlossen ist. Im Fehlerfall eines Stromes über den Erdleiter löst der für die Ladeinfrastruktur vorgeschriebene Fehlerstromschalter aus und beendet den Ladevorgang sofort.

Gut zu sehen ist in dieser Figur auch, dass die Anschlüsse für die Temperatursensoren **253** gleichartig ausgebildet sind wie die Anschlüsse der Bus(signal)kontaktstifte **11,** und zusammen mit den Anschlüssen der Buskontaktstifte **11** in einem gleichmäßigen Raster angeordnet sind. Diese Maßnahme hat den Vorteil, dass eine einzelne Steckverbindung zur Herstellung aller Kontakte der Temperatursensoren und der Buskontaktstifte verwendet werden kann.

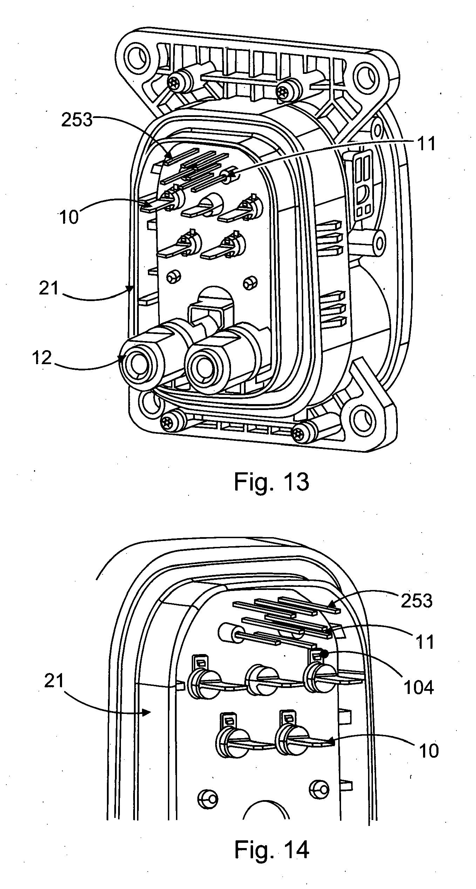

**Fig. 13** zeigt eine Gesamtansicht der Baugruppe mit angebrachten Blech **103** zur Verbindung von AC-Leistungskontakt **10** und NTC-Temperatursensor **251.** Hier sind die PT1000-Temperatursensoren **252** für DC-Leistungskontaktstifte in ihrer realen Größe gezeigt, weswegen sie nahezu vollständig unter den Abflachungen der DC-Leistungskontaktstifte **12** verschwinden, und deswegen direkt mit dem abgeflachten Teil Verbindung haben und daher kein Blech für die Übertragung der Wärme benötigen.

**Fig. 14** zeigt eine Detailansicht der Baugruppe einer zweiten Alternative mit angebrachter Folie **104** zur thermischen Verbindung von AC-Leistungskontakt **10** und NTC-Temperatursensor **251.** Die Folie weist ebenso wie das Blech eine ringförmige Form auf, die sich an den AC-Leistungskontaktstift **10** schmiegt, und hat genauso eine Lasche, welche auf dem NTC-Temperatursensor **251** für AC-Leistungskontaktstifte **10** zu liegen kommt und für einen guten Wärmeübergang sorgt. Vorteil der Folie ist die Kompressibilität und die Klebrigkeit, welche einen exzellenten Wärmeübergang auf den NTC-Temperatursensor **251** gewährleistet.

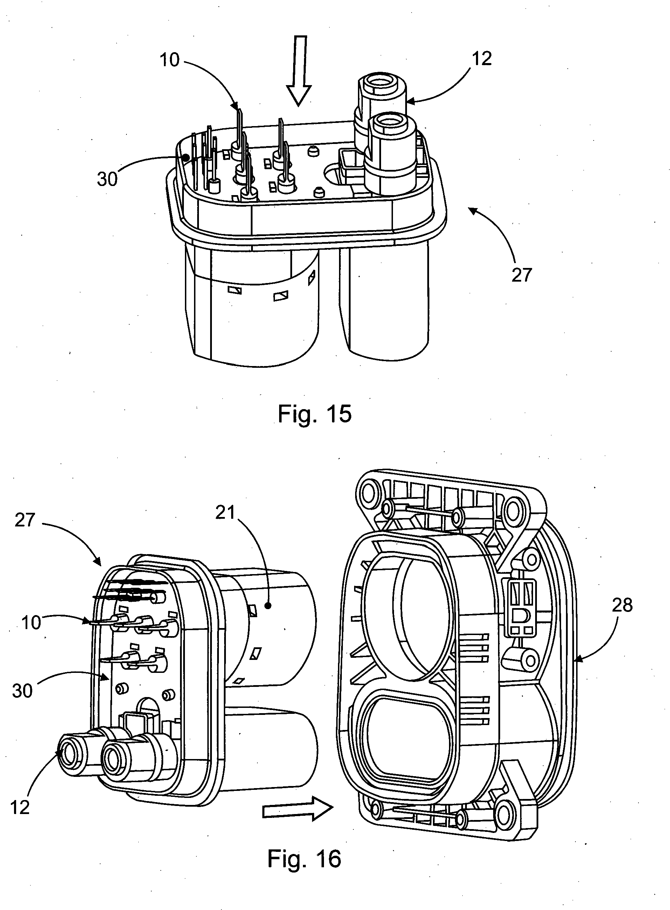

**Fig. 15** zeigt als nächsten Herstellungsschritt das Einbringen einer wärmeleitfähigen Vergußmasse **30** zur Isolation und besseren Wärmeübertragung. Es wird die gesamte Leiterkarte inclusive der NTC-Temperatursensoren **251** für AC-Leistungskontaktstifte **10** und der PT1000-Temperatursensoren **252** für DC-Leistungskontaktstifte **12** vergossen. Die Höhe des Vergusses ist so gewählt, dass die Leiterkarte inclusive der Sensoren komplett bedeckt ist und die elektrischen Leiter auf der Leiterkarte somit gegen Feuchtigkeit und sonstige äußere Umwelteinflüsse geschützt sind. Die Vergussmasse **30** weist aber ebenfalls eine gute Wärmeleitfähigkeit auf und unterstützt die Maßnahmen zur Wärmeübertragung von den Kontaktstiften auf die Temperatursensoren nochmals. Die Flachsteckkontakte **102,** die Anschlüsse für die Temperatursensoren **253** sowie die Schraubanschlüsse der DC-Leistungskontaktstifte **12** ragen hierbei aus der Vergußmasse heraus. Es kann jede für den Verguß von Elektronikkomponenten zertifizierte Vergußmasse verwendet werden, insbesondere epoxidharzbasierte oder silikonbasierte Vergußmassen. Je nach Anforderung können aber auch mineralölbasierte Vergußmassen zur Verwendung kommen. In der Automobilindustrie werden oft silikonbasierte Vergußmassen verwendet. Das Ergebnis dieses Herstellungsschrittes ist die vergossene Baugruppe **27.**

Als nächsten Herstellungsschritt zeigt **Fig. 16** das Einsetzen der Baugruppe **27** in einen Rahmen **28.** Die Baugruppe **27** wird hierbei in den Rahmen **27** eingeschoben, der Aussparungen für die Typ-2 Kontakte und die CCS-Kontakte aufweist.

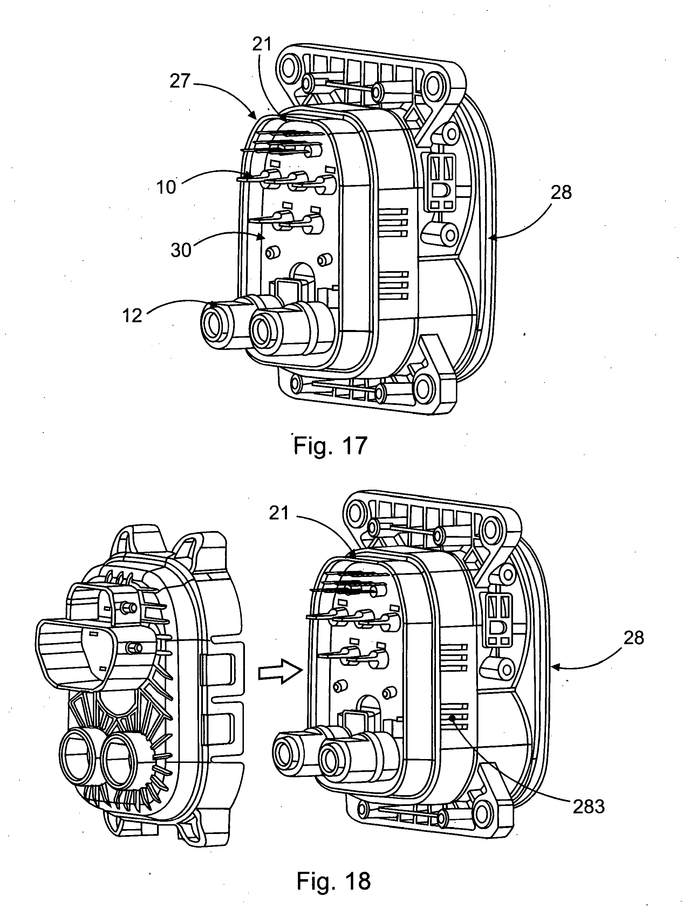

**Fig. 17** zeigt die in den Rahmen **28** eingesetzte Baugruppe **27.**

**Fig. 18** zeigt als nächsten Herstellungsschritt das Aufsetzen und Verrasten eines Deckels **29** auf die in den Rahmen **28** eingesetzte Baugruppe **27.** Der mit Rastlaschen versehene Deckel **29** wird hierbei einfach auf den Rahmen **28** mit der Baugruppe **27** aufgeschoben, bis die Rastlaschen in entsprechende Vorsprünge auf dem Rahmen **28** einrasten und den Deckel formschlüssig halten.

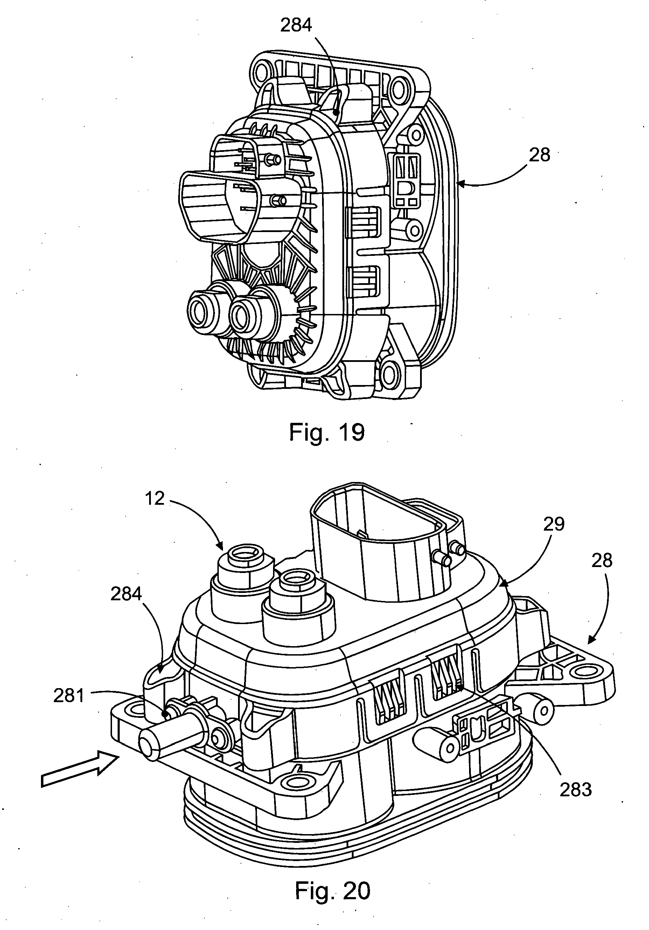

Um eine solide Einheit zu bilden, wird der Deckel **29** im nächsten Schritt mit dem Rahmen **28** verschraubt, was in **Fig. 19** gezeigt ist. Der Deckel **29** weist 4 Aussparungen für Verschraubungen **284** auf, welche in Aufnahmen des Rahmens **28** münden.

**Fig. 20** zeigt mit dem Einschrauben eines Wasserablaufs **281** in den Rahmen **28** den nächsten Schritt in der Herstellung des Inlets. Der Wasserablauf **281** wird einfach in den Rahmen **28** geschraubt.

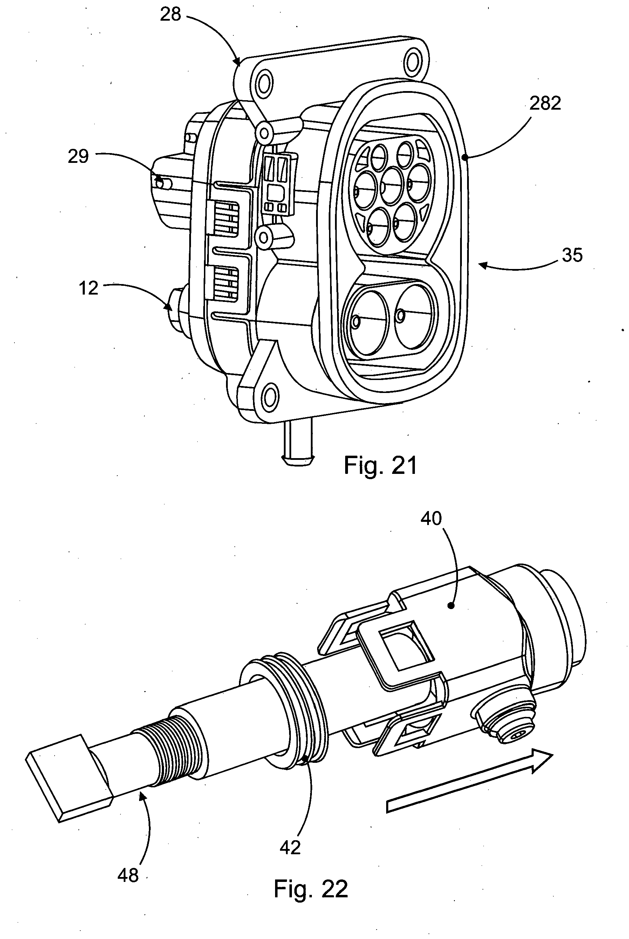

**Fig. 21** zeigt als letzten Herstellungsschritt des Inlets **35** das Aufbringen eines Dichtbandes **282** auf den Rahmen. Das vorkonfektionierte Dichtband oder Dichtungsband wird hierbei einfach auf den Rahmen **28** aufgeschoben. Das Ergebnis dieses Herstellungsschrittes ist das gesamte montierte Inlet **35.**

### Aufbau und Zusammenbau des DC-Anschlusses

Die **Fig. 22** bis **32** zeigen den Aufbau und gleichzeitig den Zusammenbau des DC-Anschlusses und die Komplettierung des zuvor beschriebenen Fahrzeuginlets **35.**

**Fig. 22** zeigt als vorbereitenden Schritt das Aufschieben einer DC-Anschlusskappe **40** und einer Kabeldichtung **42** auf ein Kabel. Im ersten Schritt wird ein Kabel vorkonfektioniert, indem die verschiedenen Isolierungen in verschiedenen Längen am Ende des Kabels entfernt werden, und der Leiter bestehend aus einer Vielzahl von Litzen flachgedrückt wird. Dann wird zuerst eine DC-Anschlusskappe **40** und dann eine Kabeldichtung **42** auf das Kabelende geschoben.

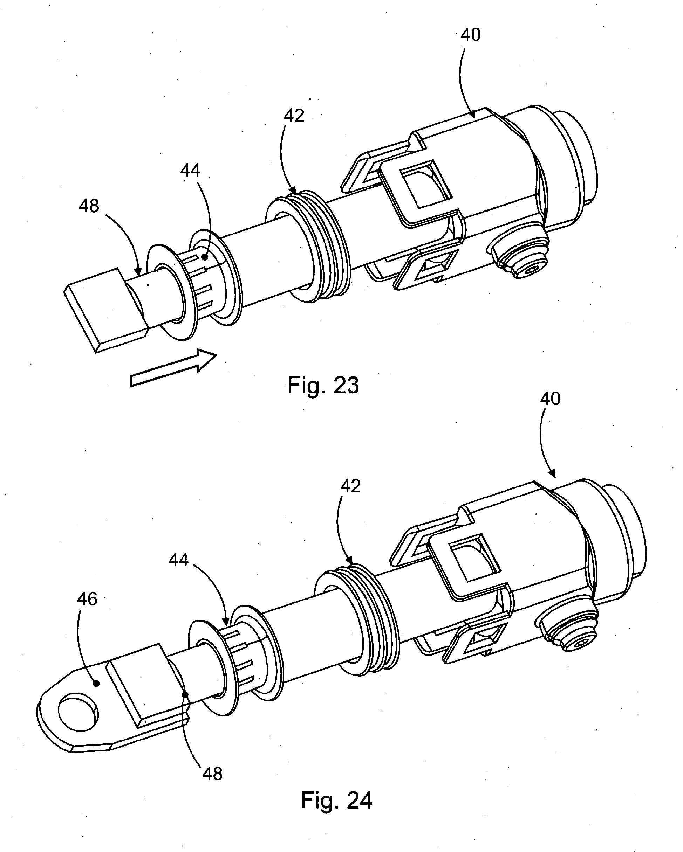

Im nächsten Schritt wird in **Fig. 23** das Aufschieben und Crimpen einer Schirmhülse **44** gezeigt. Die ebenfalls vorkonfektionierte Schirmhülse **44** wird auf das Kabelende aufgeschoben, plaziert und gecrimpt.

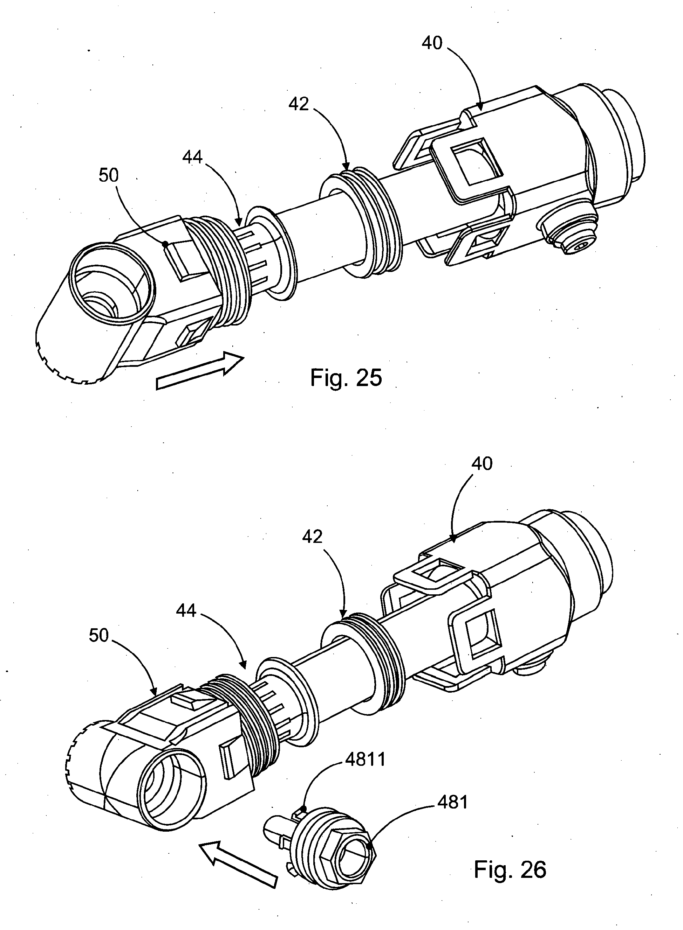

Der nächste, in **Fig. 24** gezeigte Schritt ist das Verbinden einer Schweißfahne **46** mit den Litzen der Leitung **48** durch Ultraschallschweißen. Die Schweißfahne wird unter die flachgedrückten Litzen der Leitung **48** gelegt, und mittels einer Ultraschallschweißmaschine verschweißt. Die Schweißfahne weist eine Bohrung zur Aufnahme einer Schraube **4811** (nicht gezeigt) auf. Der nächste in **Fig. 25** gezeigte Schritt ist das Aufschieben eines DC-Anschlussgehäuses **50** auf die Schweißfahne **46.** Das DC-Anschlussgehäuse **50** wird bis zur schon gecrimpten Schirmhülse **44** auf das Kabelende aufgeschoben wie gezeigt.

**Fig. 26** zeigt das Einsetzen einer DC-Anschlussschraube **481** in das DC-Anschlussgehäuse **50.** Durch das Einsetzen der DC-Anschlussschraube **481** wird das DC-Anschlussgehäuse **50** am Kabelende fixiert, so dass es nicht mehr abfallen kann. Die DC-Anschlussschraube **481** weist eine Schraube **4811** auf, welche durch die Bohrung der Schweißfahne hindurchreicht und damit die gesamte Anordnung am Kabelende fixiert. Die DC-Anschlussschraube **481** weist Kunststoffrastnasen auf, welche mit entsprechenden Nuten im DC-Anschlussgehäuse **50** korrespondieren, so dass die DC-Anschlussschraube **481** nach dem Einsetzen in das DC-Anschlussgehäuse **50** nicht mehr herausrutschen kann. Die Rastnasen sind derart ausgestaltet, dass die Schraube **4811** weiterhin drehbar ist, aber eben nicht mehr herausfallen kann.

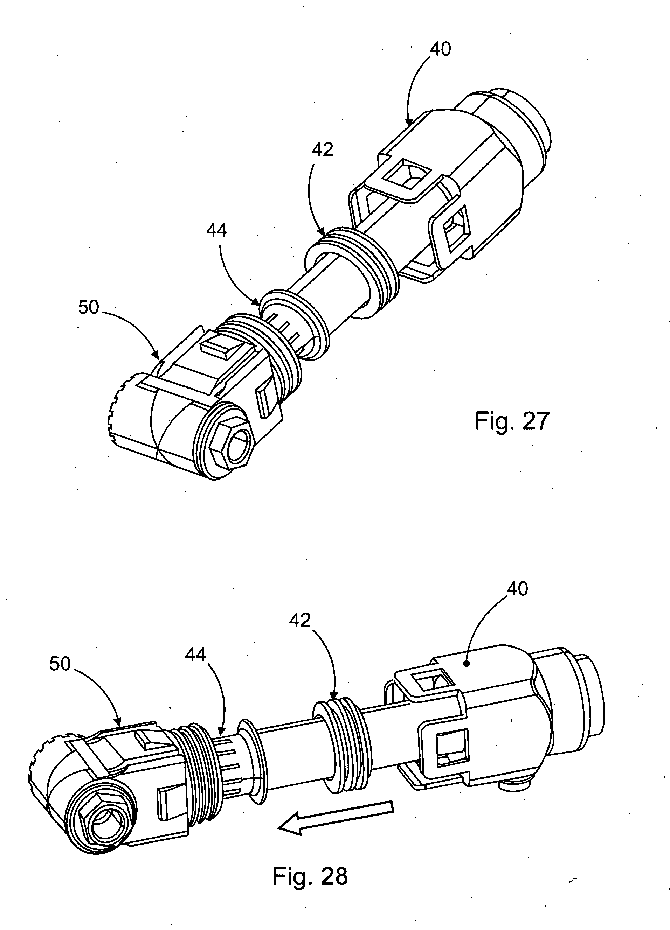

**Fig. 27** zeigt dann die bisherige Baugruppe mit eingesetzter DC-Anschlussschraube **481.**

Der nächste Schritt ist das Zurückschieben der DC-Anschlusskappe **40,** wie in **Fig. 28** gezeigt. Die DC-Anschlusskappe **40** weist Rastlaschen auf, welche mit entsprechenden Rastnasen auf dem DC-Anschlussgehäuse **50** interagieren, und die DC-Anschlusskappe **40** mit dem DC-Anschlussgehäuse **50** formschlüssig verrasten.

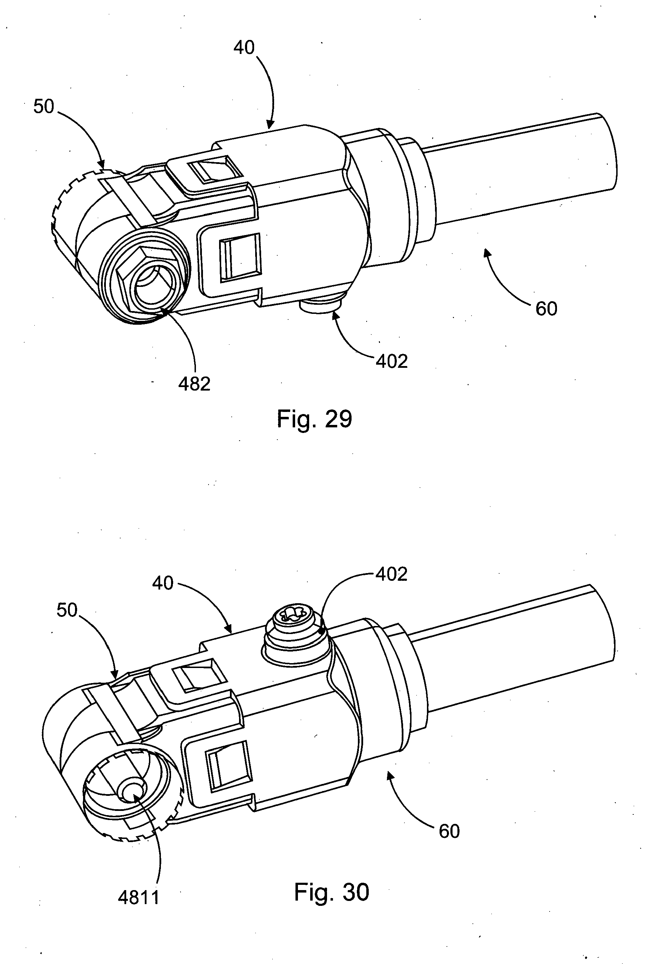

**Fig. 29** zeigt dann die auf dem DC-Anschlussgehäuse **50** verrastete DC-Anschlusskappe **40.** Die DC-Anschlussschraube **481** weist auf einer Seite eine hexagonale Schlüsselweite zum Anziehen der Schraube **4811** auf. Die DC-Anschlusskappe **40** weist einen Schirmabgang **402** auf, an dem ein Schirmleiter angeschlossen werden kann. Die gesamte Baugruppe ist der fertiggestellte DC-Kabelanschluss **60.**

**Fig. 30** zeigt den fertiggestellten DC-Kabelanschluss **60** aus **Fig. 29** in einer anderen Perspektive, wobei die verrastete DC-Anschlusskappe **40** mit sichtbarem Schirmabgang gezeigt ist.

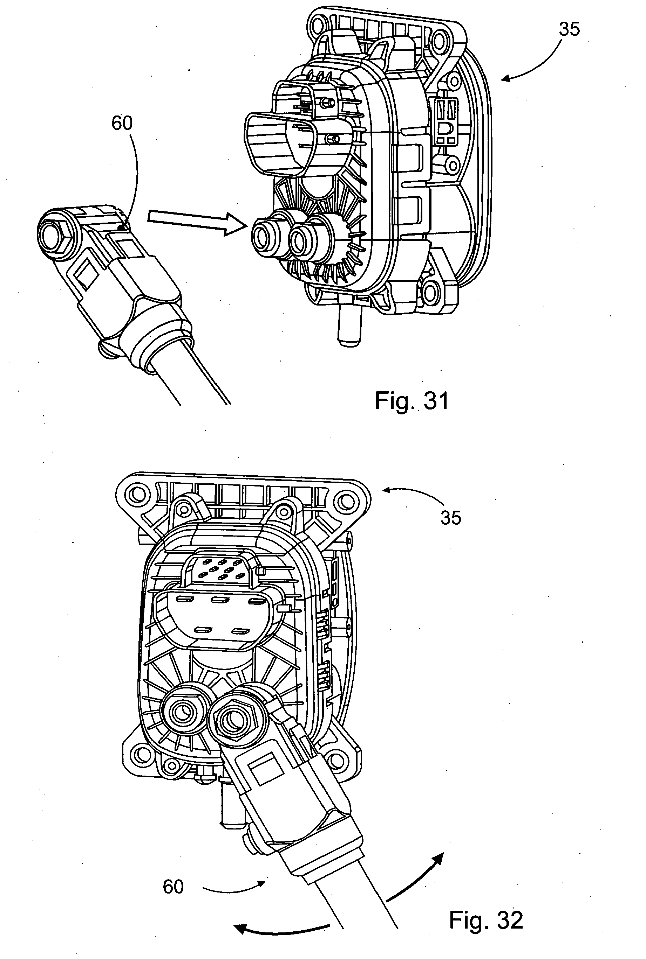

**Fig. 31** zeigt als nächsten Herstellschritt das Anschrauben des DC-Kabelanschlusses **60** an das Inlet **35.** Dazu wird der DC-Kabelanschlusses **60** derart auf das Inlet **35** aufgesteckt, dass die Schraube **4811** in dem Schraubenloch des DC-Leistungskontaktstiftes **12** zu liegen kommt. Nun kann mittels der hexagonalen Schlüsselweite **482** die Schraube auf den DC-Leistungskontaktstift **12** aufgeschraubt werden. Nach Anzug der Schraube mit einem definierten Drehmoment ist ein hochstromfähiger Kontakt zum DC-Leistungskontaktstift **12** hergestellt, wobei der Abgang drehbar und wasserdicht ist, da in das DC-Anschlussgehäuse **50** eine Dichtung eingearbeitet ist, welche mit einer Schulter im Deckel **29** interagiert und den Kontakt abdichtet.

**Fig. 32** wiederum zeigt nochmals die gesamte Baugruppe aus Inlet **35** und DC-Kabelanschluss **60,** wobei die Drehbarkeit des DC-Kabelanschlusses **60** durch Pfeile angedeutet ist.

### Bezugszeichenliste

- 10: AC-Leistungskontaktstift
- 101: Genormter Rundkontakt des AC-Leistungskontaktstiftes 10
- 102: Flachsteckkontakt des AC-Leistungskontaktstiftes 10
- 103: Blech zur Verbindung von AC-Leistungskontakt und NTC-Temperatursensor
- 104: Folie zur Verbindung von AC-Leistungskontakt und NTC-Temperatursensor
- 11: Buskontaktstift
- 12: DC-Leistungskontaktstift
- 13: Kunststoffumspritzung zur Anordnung der Kontaktstifte
- 14: Kunststoffumspritzung als Anschlag für die Montage
- 20: Halteklammer für AC- und Buskontaktstifte
- 201: Verdrehschutz
- 21: Isolierkörper
- 211: Verrastung
- 22: Halteklammer Baugruppe
- 25: Leiterkarte
- 251: NTC-Temperatursensoren für AC-Leistungskontaktstifte
- 252: PT1000 Temperatursensoren für DC-Leistungskontaktstifte
- 253: Anschlüsse für Temperatursensoren
- 27: Vergossene Baugruppe
- 28: Rahmen
- 281: Wasserablauf
- 282: Dichtband
- 283: Verrastung
- 284: Deckelverschraubung
- 29: Deckel
- 30: Vergußmasse
- 35: Das gesamte montierte Inlet
- 40: DC-Anschlusskappe
- 402: Schirmabgang DC Anschlusskappe
- 42: Kabeldichtung
- 44: Schirmhülse
- 46: Schweißfahne
- 48: Leitung
- 481: DC-Anschlussschraube
- 4811: Schraube der DC-Anschlussschraube
- 482: Hexagonale Schlüsselweite der DC-Anschlussschraube zum Anziehen der Schraube 4811
- 50: DC-Anschlussgehäuse
- 60: DC-Kabelanschluss

## Patentansprüche

1. Verfahren zur Herstellung eines Inlets für ein Multikontaktstecksystem zur Übertragung hoher elektrischer Gleichspannungs- und Wechselspannungsleistungen sowie einer Buskommunikation, **gekennzeichnet durch** folgende Schritte:
1) Umspritzung von mehreren AC-Leistungskontaktstiften (10) und Buskontaktstiften (11) in einer vorbestimmten Konfiguration und/oder Verrastung in einer Halteklammer (20) zur Herstellung einer Halteklammer Baugruppe (22),
2) Einschieben der Halteklammer Baugruppe (22) in einen Isolierkörper (21), Einsetzen einer Leiterkarte (25) mit darauf angebrachten Temperatursensoren (251, 252) und Einbringen thermischer Brücken (103, 104) zwischen AC-Leistungskontaktstiften (10) und Temperatursensoren (251, 252) sowie Vergießen der Leiterkarte (25) mit einer Vergußmasse zur Herstellung einer vergossenen Baugruppe (27),
3) Verschrauben und/oder Verrasten mit Rahmenteilen (28, 29) zur Herstellung des Inlets (35).

2. Verfahren gemäß Anspruch 1, **dadurch gekennzeichnet, dass** zur Herstellung des Inlets (35) zusätzlich noch ein Wasserablauf (281) an ein Rahmenteil (28, 29) angebracht wird.

3. Verfahren gemäß einem der Ansprüche 1 oder 2, **dadurch gekennzeichnet, dass** zur Herstellung des Inlets (35) zusätzlich noch ein Dichtband (282) auf eins der Rahmenteile (28, 29) aufgebracht wird.

4. Verfahren gemäß einem der Ansprüche 1 bis 3, **dadurch gekennzeichnet, dass** die thermischen Brücken (103) Stanz-Biegebleche sind, welche auf die jeweiligen AC-Leistungskontaktstifte (10) aufgeschoben werden, und die Stanz-Biegebleche eine Lasche aufweisen, die in Montagelage auf dem jeweiligen Temperatursensor (251) aufliegt.

5. Verfahren gemäß einem der Ansprüche 1 bis 3, **dadurch gekennzeichnet, dass** die thermischen Brücken thermisch leitende Folien (104) sind, welche an den jeweiligen AC-Leistungskontaktstiften (10) angebracht werden, wobei die thermisch leitenden Folien (104) jeweils eine Lasche aufweisen, welche in Montagelage auf den jeweiligen Temperatursensor (251) aufgeklebt wird.

6. Verfahren gemäß einem der vorhergehenden Ansprüche,
**dadurch gekennzeichnet, dass** die Leiterkarte (25) Anschlüsse für die Temperatursensoren aufweist.

7. Verfahren gemäß Anspruch 6, **dadurch gekennzeichnet, dass** die Anschlüsse der Temperatursensoren (253) gleichartig wie die Anschlüsse der Buskontaktstifte (11) ausgebildet sind und mit den Anschlüssen der Buskontaktstifte (11) in einem Raster angeordnet sind.

8. Verfahren gemäß einem der Ansprüche 2 bis 7, **dadurch gekennzeichnet, dass** der Wasserablauf Teil eines der Rahmenteile (28, 29) ist.

9. Verfahren gemäß einem der Ansprüche 3 bis 8, **dadurch gekennzeichnet, dass** das Dichtband Teil eines der Rahmenteile (28, 29) ist.

10. Inlet für ein Multikontaktstecksystem zur Übertragung hoher elektrischer Gleichspannungs- und Wechselspannungsleistungen sowie einer Buskommunikation, hergestellt nach einem der Ansprüche 1 bis 9.

11. Inlet gemäß Anspruch 10, **dadurch gekennzeichnet, dass** es für den Einbau in ein Fahrzeug konfiguriert ist.

12. Stecker für ein Multikontaktstecksystem zur Übertragung hoher elektrischer Gleichspannungs- und Wechselspannungsleistungen sowie einer Buskommunikation, **dadurch gekennzeichnet, dass** auf ein Inlet gemäß Anspruch 10 2 DC-Kabelanschlüsse aufgeschraubt sind, sowie Steckverbindungen zur Kontaktierung der AC-Leistungskontaktstifte (10) und der Anschlüsse der Temperatursensoren (253) sowie der Buskontaktstifte (11) angebracht sind.
